# EUROPEAN PATENT APPLICATION

(11) **EP 4 186 653 A1**
(43) Date of publication of application: **31.05.2023**
(21) Application number: 21210549.8
(22) Date of filing: 25.11.2021
(51) Int. Cl.: B25J 15/02, B25J 15/12

(54) **AUTOMATIC GRIPPER**

(71) Applicant: Helmut-Schmidt-Universität, Universität der Bundeswehr Hamburg, 22043 Hamburg (DE)
(72) Inventor: Bruns, Rainer, 22043 Hamburg (DE); Ulrich, Stephan, 22043 Hamburg (DE)
(74) Representative: RGTH

(57) **Abstract**

To provide an automatic gripper (100) comprising a base (10), with at least two fingers (2), each at least partially swivelably connected to the base (10), at least one drive (19) comprising a motor (8), that provides the correct necessary gripping force and/or pressing force to lift a wide range of objects, wherein the objects can have different weights, friction coefficients, sizes, and forms, without damaging the objects, it is proposed that drive (19) further comprises a pulling device (9) and a traction means (1) and an elastic means (5), wherein a first end (1a) of the traction means (1) is connected to the pulling device (9), wherein the pulling device (9) is configured to pull the traction means (1) and to swivel at least one of the fingers (2) by pulling the traction means (1), wherein the traction means (1) comprises an outer surface (6) configured to form a friction fit with an object (12) to be lifted.

## Description

The invention relates to an automatic gripper comprising a base, with at least two fingers, each at least partially swivelably connected to the base, and at least one drive comprising a motor. The invention further relates to a method for operating an automatic gripper.

### Technical Background

In many areas of industrial production, trade, logistics, agriculture, handicrafts, but also in health care as well as nursing and care for the elderly, objects of the most varied types and composition have to be gripped and handled. In the vast majority of cases, this task is still performed by people. For various reasons, however, there have long been efforts to automate the gripping and handling of objects and to perform it with machines, especially robots. For example, automating gripping can make this process faster, safer and cheaper. However, the aim of automation can also be to relieve people of monotonous or dangerous tasks. For this reason, many different technical devices for gripping objects (referred to as grippers in the following) have already been developed and manufactured in the past.

Artificial grippers with at least two fingers, but usually three or four fingers, have proven particularly useful for grabbing smaller objects. These grippers are to some extent modelled after the human hand, with which objects of the most varied kinds can be gripped easily and securely. Artificial grippers are preferably used as endeffectors on robots of various types, such as articulated robots, gantry robots, SCARAs (Selective Compliance Assembly Robot Arm) and delta robots, so that the objects can not only be gripped but also handled. In this context, the handling of objects refers to their translatory and rotatory movement in a limited working space as well as the maintaining a certain position and orientation in space. Artificial grippers generally consist of several fingers and a base. The fingers of a gripper can be different, but they usually have the same structure. The individual fingers are attached to the hand base in a fixed or movable manner. To grip an object, the fingers must be moved or deformed in a suitable way relative to the base and/or in themselves. In the case of fingers constructed from fixed rigid elements, mobility is made possible by joints or sliding sleeves (linear guides). In the case of elastic fingers made of elastomeric, rubber-like plastics, the fingers deform in a suitable manner by the action of a physical effect, such as the reduction or increase in pressure of a fluid medium (gas or liquid) in designated cavities (chambers) of the fingers or by the contraction or dilation of electroactive polymers.

The movement of the fingers during gripping also requires a drive that provides the force required to move the fingers and press them against the object, as well as the associated mechanical power. In order to be able to lift and move the object after gripping, forces must be transmitted between the fingers of the gripper and the object. This can be done by a form fit or a friction fit force transmission. A form-fit force transmission has many advantages. However, it requires a special shape and sufficient dimensional stability of the object, which are not found in most objects. Therefore, a gripper that is able to flexibly grip a wide range of different objects should be configured for frictionally engaged force transmission. In such a gripper, both the force required to lift the object (the weight force of the object) and the force required to accelerate (the mass inertia forces when starting and stopping the movements and when moving the objects on curved paths (trajectories)) must be transmitted by friction between the surfaces in the contact area of the fingers and the object. Friction, however, requires a pressing force between the surfaces in contact. The contact force of the fingers, i.e. the force with which the fingers are pressed onto the object, must therefore be sufficiently high to be able to lift and move the object safely. Otherwise, the object could slip out of the gripping hand during handling and fall down. This would not only damage the object and interrupt the work process but could also cause hazards for equipment and people. On the other hand, the driving force of the fingers should not be too great, otherwise the objects to be gripped could be damaged. For the automatic gripping of different objects, the pressure force of the fingers must therefore be set object-specifically, i.e. individually for each type of object. This requires that the finger pressure can be set precisely enough, for example with the help of an electronic control system. This could require sensors to measure the finger pressure. In addition, the weights and the friction coefficients for the surface pairings of the finger surface/object surface must be known. The values of these object parameters can be stored in a database for all types of objects to be gripped and made available to the gripper control. However, this involves a great deal of effort for obtaining, storing and maintaining the data. Another problem for a safe process flow is that the values of the friction coefficient can vary considerably. For example, the coefficient of friction can be significantly reduced by dirt or moisture on the fingers or the object. In addition, a prompt update of the object data, for example if packaging of products has changed, is essential for a safe gripping of the objects.

JP H 1095590 A discloses a cargo hoisting equipment having tongs to safely hold cargo with simple structure which is turnably supported by an opening/closing holding body at an intermediate part so that a pair of tongs formed in a curved lever shape are opposite to each other on a recessed side, an upper end part of the tongs are turnably supported by an elevating/lowering holding body through an intermediate link, and holding parts provided on a lower end part of a pair of tongs are brought close to each other to hold a cargo. An eccentric cam is turnably fitted to the tongs as a holding claw at the lower end, and a stopper to regulate the downward turning of the cam at the prescribed position is provided so that the abutting position of the cam on the cargo is located higher than the position of the center of turning of the cam.

### Description of the invention: problem, solution and advantages

It is an object of the present invention to provide an automatic gripper that provides the correct necessary gripping force and/or pressing force to lift a wide range of objects, wherein the objects can have different weights, friction coefficients, sizes, and forms, without damaging the objects.

The object is solved by an automatic gripper comprising a base, with at least two fingers, each at least partially swivelably connected to the base, at least one drive comprising a motor, characterized in that the drive further comprises a pulling device and a traction means and an elastic means, wherein a first end of the traction means is connected to the pulling device, wherein the pulling device is configured to pull the traction means and to swivel at least one of the fingers by pulling the traction means, wherein the traction means comprises an outer surface configured to form a friction fit with an object to be lifted.

The object to be lifted is placed under the base and between the fingers and the motor actuates the pulling device. Further, the pulling device pulls the traction means thereby swiveling the fingers in direction of the object. At some point the outer surface of the traction means comes in contact with the object. The motor continues to operate and therefore builds more tension on the traction means. As soon as the combined frictional force of the fingers is the same as the weight of the object the object is lifted by the movement of the traction means.

The drive is preferably a traction drive.

The traction means are preferably flexible about an axis transverse to their longitudinal direction. The traction means preferably comprise or are configured as fabric straps, foil straps, link chains of plastic and/or metal and/or ropes.

The pulling device is preferably a winding drum, a hydraulic cylinder, a pneumatic cylinder and/or an electric spindle drive or an electromagnetic linear drive.

In case the pulling device is a winding drum, the traction means can be wound up on the winding drum by rotating the winding drum. The motor is preferably an electric motor. If the primary motion of the motor is rotation, then this motion can preferably be used directly to rotate the winding drum on which the traction means is wound. Alternatively, the rotary motion of the motor can be converted into a linear motion using a gearbox such as a spindle drive, worm gear or toothed belt drive, which can then be used to pull the traction means. The same can be achieved with motors whose primary movement is a linear movement.

Preferably, each finger comprises at least one fingertip, wherein the fingertip comprises at least one roller, wherein the at least one roller is preferably connected to the fingertip, wherein the traction means is further preferably guided over the fingertip and/or guided over the at least one roller.

Further preferably a second end of the traction means is connected to the elastic means, and/or the traction means is the elastic means, and/or the traction means comprises the elastic means.

The elastic means preferably comprise or consists of a traction spring and/or a rubber band. Preferably, the traction spring has a non-linear, more preferably a strongly progressive characteristic curve. More preferably the traction spring has a characteristic curve in the working range that corresponds to an exponential function and the spring force increases exponentially with the spring travel, wherein the working range is the range in which the spring forces are during gripping. This ensures that the holding force of the gripper i.e. the maximum friction force that can be transmitted between the object and the traction means of the fingers is always greater than the weight of the object by a constant factor, regardless of the weight of the object. This is very advantageous for the operation of the gripper because all objects can then be lifted with the same vertical acceleration without the risk of slipping out.

More preferably the characteristic curve is approximated by the combination of several springs interconnected with each other, in particular, a package of several disc springs arranged in the same direction and in opposite directions.

Preferably, the traction means is pulled in its longitudinal direction when the motor is operated. For example, the traction means can be wound on a winding drum.

Preferably, the at least one roller comprises and/or is coated with an elastic material, and/or the outer surface of the traction means comprises a coating, wherein further preferably the coating is configured to improve the contact and/or the friction with the object to be lifted and/or configured to provide an increased surface area.

In this way, the friction between the coating and the object surface is increased. This means that the coating surface and the object surface combined have a high friction coefficient. The high friction surfaces and/or the increased surface area is particularly advantageous because it improves the safety of the operation when the object is less likely to slip and fall.

Preferably, the outer surface coating of the traction means comprises a soft rubber and/or an elastomeric plastic, in particular silicon, and/or leather. The outer surface is preferably firmly connected to the traction means and/or allows a high friction on the one hand and is sufficiently wear and abrasion resistant on the other hand.

Still further preferably, the outer surface of the traction means is configured to comprise a coating in an area where it comes into contact with the object to be lifted.

This area may be in the region where the traction means are guided over the at least one roller and/or the fingertip. The outer surface is preferably facing away from the finger, fingertip and/or the at least one roller.

Preferably, the traction means has an intermediate layer, further preferably of soft plastic, between the outer surface and an inner layer of the traction means.

Further preferably the soft elastic plastic is a foam layer.

The outer surface is preferably smooth and even and/or it is provided with knobs, transverse ribs, suction cups or the like.

The task of the roller is to transfer the pressure force from the finger to the object via the traction means and preferably its contact coating and at the same time to enable a low-friction relative movement between the traction means and the fingertip. To ensure that the pressure force is transmitted over as large an area as possible, the pressure roller preferably flattens under the effect of the pressure force and adapts to the contour of the object surface.

Preferably the at least one roller is configured as a low friction roller, more preferably a low friction roller with a ball bearing, and/or the fingertips of the at least two fingers comprise a low friction surface.

Also, preferably the fingertips of the at least two fingers are configured to guide the traction means.

Preferably the fingertip of the finger comprises a pressure surface, wherein the pressure surface is the surface of the fingertip and is in direct contact with the traction means, more preferably the pressure surface comprises a low-friction surface which can be advantageous because the frictional force between the traction means and the pressure surface should be as small as possible to ensure proper movement of the traction means and therefore a safe function of the automatic gripper. In case the pressure surface is used preferably no rollers are used. Preferably, lubricants are disposed between the traction means and the low friction surface to reduce friction and further facilitate proper movement of the traction means.

Preferably, the base comprises a sensor, wherein the sensor is configured to measure a distance, preferably of the base, to the object to be lifted and/or wherein the sensor is configured to measure a vertical force acting on the base, wherein the sensor is further configured to provide measured values to an electronic control unit.

Preferably, the sensor is configured as a non-contact distance sensor more preferably the sensor is an ultrasonic and/or laser sensor. The sensor may also be configured as a force sensor.

By providing the values to the electronic control unit, the automatic gripper can determine whether the object is completely lifted yet. The advantage offered by the detection of an initial lift is that the electronic control unit does not need to set a specific value of gripping and/or vertical force that is necessary to lift the object because by pulling the traction means around the fingertips the necessary force is automatically reached and the object lifted. This initial lift is possible without movement of the base. Additionally, no further input is required regarding the weight of the object, or the nature of the surface of the object. With the automatic gripper of this invention the necessary force is automatically adjusted and makes the operation therefore very flexible because it can deal with a wide range of different objects. After the initial lift the motor of the drive can be switched from pulling the traction means to holding the traction means by applying a constant drive torque. Preferably, the electronic control unit is configured to control the motor to switch the motor on and off and also to switch it to a hold modus in which it applies a constant drive torque.

In case the sensor is configured as a force sensor for determining the vertical force the sensor is configured to measure the force that is transferred to the base by the fingers and therefore also by the object as soon as it is gripped by the fingers. As soon as the fingers are in contact with the object the vertical force constantly increases by the additional weight of the object until the initial lift of the object when the maximum vertical force was reached and overcome. From this point the vertical force stays constant and the motor of the drive can be switched from pulling the traction means to holding the traction means by applying a constant drive torque.

Preferably, a predetermined time interval of 5 to 500 ms lies between the detection of the initial lift and the stopping of the motor to only apply a constant drive torque. Preferably, a brake mechanism can be activated when entering the hold modus, wherein after activation the motor can be shut off. By using a brake mechanism during the holding phase of the lift, the motor is relieved from the constant tension and energy usage can be reduced. Preferably the brake mechanism is activated 5 to 500 ms after the hold modus of the motor is activated and the motor is shut down simultaneously.

Preferably, the traction means are running on the inner side of the fingers in direction of the object, are then guided over the fingertip and connected to the outer side of the finger by the elastic means, therefore they move inwards in direction of the object when the pulling device pulls the traction means. Preferably, each finger is connected to a return member, in particular to a return spring, wherein the return member is connected to the base. Since the traction means is used to move the fingers inwards by pulling on them it can only transmit tensile forces but no compressive forces, therefore the fingers must be pulled back by a return spring to the initial position in which the fingers are spread apart. Otherwise, the fingers could not return into the starting position.

Preferably, the traction means is guided by at least one deflection pulley, wherein the at least one deflection pulley is attached to the center of the bottom of the base in a way that the traction means that is guided by the deflection pulley and the roller can grip the sides of the object when the fingers are swiveled inwards. Further preferably, at least on deflection pulley is attached to the at least one finger. It is advantageous to guide the traction means by the deflection pulley to deflect these in the desired direction. Preferably, the deflection pulley is a low-friction deflection pulley. Further preferably the pulling device can be arrange further to the central axis of the base or further away from the central axis of the base to further increase the force of traction means when they get in contact with the object. These arrangements of the deflection pulleys and the location of the pulling device make sure that the tensile force is transferred to the object in an optimal way.

Preferably, the at least two fingers are curved, and/or are each provided with at least two rollers.

A curved finger can be advantageous if the automatic gripper is supposed to lift larger objects. Curved means that the fingers essentially have a C- and/or an S-shape.

The at least two rollers have the advantage, that each added roller provides an increased contact area of the traction means with the objects.

Preferably, the at least two fingers are configured as a double link, wherein each double link has an outer finger and an inner finger, wherein the double link comprises an intermediate part having a coupling part, wherein the coupling part is connected to the fingertip of the outer finger and to the fingertip of the inner finger by swivel joints.

Preferably, the intermediate part is arranged in a way that at least two rollers, more preferably all rollers are in contact with the object. This double link design prevents the intermediate part from tilting. The double link forms a parallel guide together with the intermediate part, so that the arrangement of the pressure rollers on the intermediate part remains unchanged in its orientation relative to the hand base during the finger movement. This prevents the gripped object from tilting between the fingers, which could possibly lead to the object slipping out of the automatic gripper.

The outer finger is subjected to a compressive force when gripping and should preferably be more stable than the inner finger, which is only subjected to a tensile force. In addition, the double link is preferably curved to enable larger objects to be gripped.

Preferably, the intermediate part has a mounting part and the at least one roller is mounted on the mounting part. Also, preferably the coupling part and the mounting part are connected by a swivel joint that preferably contains a torsion spring.

The intermediate part made from two parts makes it possible that the position of the rollers can better adapt to the contour of the object. The swivel joint enables the mounting part to adapt to the contour of the object to be gripped so that both rollers can be in contact with the object. This is particularly advantageous when the opposite sides of the object to be gripped are not parallel. The torsion spring prevents the mounting part from tilting unintentionally due to its own weight and stabilises the gripped object between the fingers.

Preferably, the at least two fingers, are each rotatably connected to the base by at least one swivel joint and/or that at least one of the fingers is a leaf-spring finger, wherein the at least one leaf-spring fingers is configured as a leaf spring and is firmly connected to the base.

When both fingers are leaf spring fingers no swivel joint and/or return member are required because the leaf spring would also perform the function of a swivel joint and/ return member. This design of the fingers would not only reduce the manufacturing costs, but also the weight or mass, respectively, of the gripper.

The invention also relates to a robot comprising an automatic gripper as described above.

When using the automatic gripper on a robot, it is advantageous if the weight or mass of the automatic gripper is as low as possible. Preferably, the motor of the drive is placed on a platform on which the robot is standing to transmit the drive force/movement to the automatic gripper by a second traction means preferably consisting of ropes and/or chains and/or Bowden cables.

In order to reduce both the technical effort and thus the manufacturing costs as well as the weight of the automatic gripper, preferably a common drive motor for all fingers of the automatic gripper is provided instead of a separate drive motor for each finger.

A further solution to the object of the invention is provided with a method for operating the automatic gripper, the method comprising the following steps:
a) Placing an object under the base while the at least two fingers are spread apart, or position the base over the object,
b) Switching on the drive so that the motor is activated and actuates the pulling device, the pulling device pulling the traction means,
c) By pulling of the traction means, swiveling the fingers towards each other in direction of the object so that the outer surface of the traction means contacts the object,
d) detecting an initial lift of the object; and
e) after detecting the initial lift, and preferably after a predetermined time interval and/or after reaching a predetermined threshold of the initial lift, stopping the motor of the drive such that a constant drive torque is maintained.

In step e) the motor preferably remains switched on for a predetermined time interval and the traction means continues to be tensioned by the pulling device. This increase in the tensile force in the traction means leads to an increase in the contact force between the traction means, which is preferably guided over the fingertip, and the object. The motor is then stopped and the drive torque maintained to maintain the contact force between the fingertip and the object constant. The predetermined time interval is the time between the detection of the initial lift and the moment when electronic control system stops the motor and switches the motor to a hold modus to apply a constant drive torque, preferably the predetermined time interval is between 5 to 500 ms. The predetermined threshold of the initial lift is the amount of distance that is considered the initial lift, preferably the threshold is between 1 mm and 10 cm. More preferably, after a second predetermined time interval after switching the motor to the hold modus a brake mechanism is activated that prevents the object from sliding by applying a constant contact force to the object and the motor is switched off. The second predetermined time interval is preferably between 5 and 500 ms.

Preferably in step d) the contact force between the fingertip of the fingers via the traction means and the object is increased until the combined frictional force of the fingers is the same as the weight force of the object and the object is lifted by the movement of the traction means. This first lift of the object is referred to as the initial lift and is preferably caused only by the movement of the traction means and its friction fit with the object, without any movement of the base.

Further preferably during step d) the lift of the object is measured continuously, in particular by measuring the distance of the base to the object with a sensor, preferably a non-contact distance sensor, more preferably an ultrasonic or laser sensor. Preferably, in case a force sensor is used, the sensor is preferably located at a connection area between the base and the fingers. The force sensor measures the vertical force of the base and the fingers. As soon as the fingers are swiveled inwards and the object is gripped, the vertical force begins to increase due to the tensioning of the traction means. The tensioning continues and thereby also the contact force of the fingers to the object. The sensor measures continuously that the force increases. At some point the tension force will be equal or greater than the weight force of the object and the object will be pulled up between the fingers without the base moving. At this point the force sensor has determined the maximum vertical force and the measured values stay constant.

More preferably the measured values of the sensor are transmitted to an electronic control unit continuously and/or at short intervals during the gripping process.

Still further preferably the traction means continues to be tensioned and the elastic means also continues to be tensioned.

Preferably, this increases the tensioning of the tension means and thereby the contact force between the fingertip and/or the traction means and the object and the limit value of the force needed for the initial lift can therefore be used to set the contact pressure at the end of the initial lift.

Preferably this limit value is saved by the electronic control unit and is used for future lifts.

Therefore, any object, no matter which weight it has can be lifted and after the initial lift no further force is require. The motor can stop building additional tension force but needs to maintain the current drive torque to avoid that the object can fall down or slip off. As long as the torque is maintained the base of the automatic gripper can be moved to bring the object to the desired location.

Preferably, in addition to or as an alternative to step d) the lift of the object is continuously measured by the vertical force in the base, and from the temporal course of this measured variable, the electronic control unit recognizes when the object has been completely lifted off the floor.

Preferably, both methods for detecting the initial lift, by distance sensor and force sensor are combined and thereby measuring the maximum contact force for the initial lift and the maximum contact pressure, this increases the safety of the process through redundancy.

### Short description of the figures

Examples of the invention are explained in more detail below with reference to the drawings.
Fig. 1 shows in a schematic front view an automatic gripper with two fingers,
Fig. 2 shows in a schematic front view an automatic gripper with two fingers configured as double links,
Fig. 3 shows a schematic side view of the traction means, and
Fig. 4 shows a schematic side view of an automatic gripper herein the fingers are configured as leaf springs.

### Detailed description of the figures

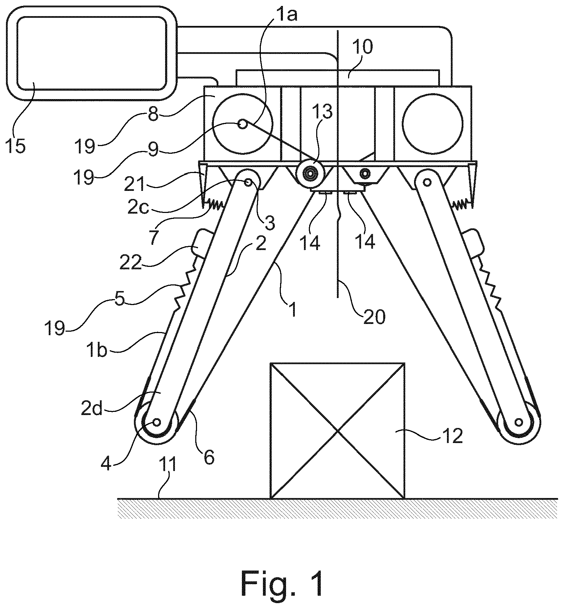

Fig. 1 shows an automatic gripper 100 in accordance with the invention. The automatic gripper 100 comprising a base 10 and at least two fingers 2, each of the fingers 2 at least partially swivelably connected to the base 10. The gripper 100 further comprises at least one drive 19 comprising a motor 8. The drive 19 further comprises a pulling device 9 and a traction means 1 and an elastic means 5. A first end 1a of the traction means 1 is connected to the pulling device 9. The pulling device 9 is configured to pull the traction means 1 and thereby swivel at least one of the fingers 2. The traction means 1 comprises an outer surface 6 configured to form a friction fit with an object 12 to be lifted, when the outer surface 6 comes into contact with the object 12.

The base 10 is formed symmetrically with respect to a central mirror axis 20.

Each finger 2 is connected with a connecting end 2c to the bottom of the base 10 by a swivel joint 3 on each side of the base 10. On the outside edge of base 10 a protrusion 21 is formed, and a return member configured as a return spring 7 is fixed with one end to said protrusion 21 while the other end is connected to the finger 2. The pulling device 9 which is configured as a winding drum 9a is connected to the traction means 1 which is configured as a fabric strap 1c and the traction means 1 is guided over a deflection pulley 13 which is connected to the bottom side of base 10 close to the central axis 20 of base 10. A sensor 14 is installed in the center of the bottom of base 10 directly above the object 12. The sensor 14 determines if the object 12 is lifted. The finger 2 has an approximately rectangular form with two long sides and two short sides. The connecting end 2c is connected by swivel joint 3 to the base 10 while the other short side is or comprises a fingertip 2d, on which a roller 4 is attached. On the outer long side, the finger 2 has a protrusion 22 that holds one end of the elastic means 5. The elastic means 5 is configured as a spring.

The traction means 1 runs from the pulling device 9 over the deflection pulley 13, then over the roller 4 and is connected with its second end 1b to the elastic means 5. In the area of the traction means 1 that is guided over the roller 4 the traction means has an additional layer, the outer surface 6.

The sensor 14 sends its data to the electronic control unit 15, which controls both drives 19.

The object 12 to be lifted is placed under the base 10 and the motor 8 actuates the pulling device 9. Further, the pulling device 9 pulls the traction means 1 thereby swiveling the fingers 2 in direction of the object 12. At some point the outer surface 6 of the traction means 1 comes into contact with the object 12. The motor 8 continues to operate and therefore builds more tension on the traction means 1. As soon as the combined frictional force of the fingers 2 is the same as the weight of the object 12 the object 12 is lifted from the surface 11 by the movement of the traction means 1. The sensor 14 detects that there is an initial lift of the object 12 and then sends this information to the electronic control unit 15. When the lift of the object has reached a predefined threshold value the electronic control unit 15 stops the motor 8 such that a constant drive torque is maintained.

The object 12 can then be moved. After the object 12 is lowered and to be dropped the motor 8 can stop maintaining the torque on the traction means 1 and the return member 7 returns the fingers 2 in the starting position.

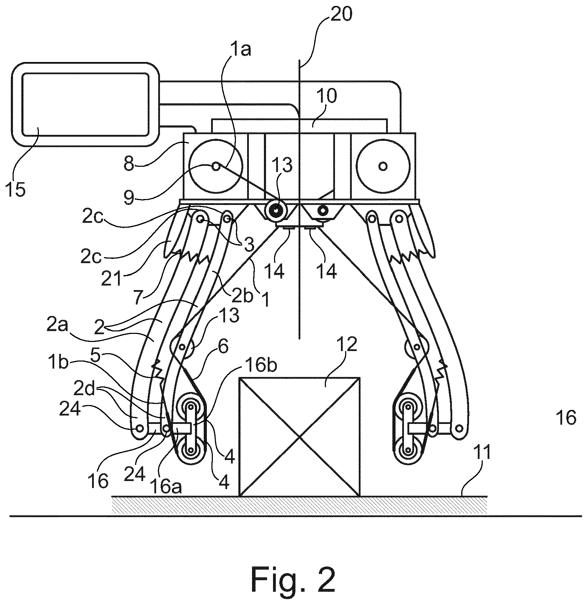

Fig. 2 shows another automatic gripper 100 in accordance with the invention similar to the automatic gripper shown in Fig. 1. The base 10 is formed symmetrically and has a mirror axis at its center the central axis 20. Attached to each end of the base 10 is a motor 8, said motor 8 being in communication with a pulling device 9. A drive 19 that consists of the motor 8, pulling device 9, traction means 1 and elastic means 5.

Here each finger 2 is configured as a double link, consisting of an outer finger 2a and an inner finger 2b each of which is connected to the bottom of the base 10 with a the connecting end 2c by a swivel joint 3. On the outside edge of base 10 a protrusion 21 is formed, and a return spring 7 fixed with one end to said protrusion 21 while the other end is connected to the outer finger 2a or the inner finger 2b. The double link finger 2 has a curved form to better grip larger objects 12. In the center of the bottom of base 10 is a sensor 14 installed.

The fingertips 2d of the outer finger 2a and the inner finger 2b are connected to an intermediate part 16 by joints 24. The intermediate part 16 consists of two parts, a coupling part 16a which is connected with a first end to the fingertip 2d of the outer finger 2a, while the middle of the coupling part 16a is connected to the fingertip 2d of the inner finger 2b, further a second end of the coupling part 16a is connected to the mounting part 16b. The coupling part 16a is connected to the center of the mounting part 16b while both parts are arranged in an approx. 90° angle to each other. The mounting part 16b has two ends, to which both are rotatably rollers 4 connected.

The tractions means 1 are guided by a first deflection pulley 13, which is attached to the base 10, then guided by second deflection pulley 13, which is attached to the inner finger 2b, subsequently the traction means 1 is guided over the two rollers 4, which are attached to the mounting part 16b and finally the traction means 1 is connected to the elastic means 5, which is connected to the outer finger 2a. With this arrangement the contact area of the tractions means 1 with the object 12 when swiveling the fingers 2 towards each other can be maximized because the traction means 1 is guided over the two rollers 4.

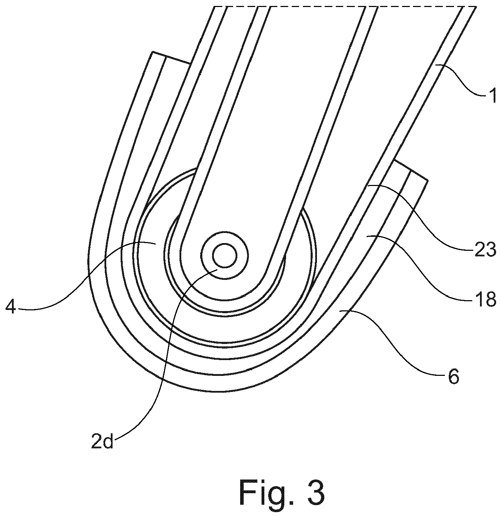

Fig. 3 shows a detailed view of the fingertip 2d of finger 2 of the automatic gripper 100 of Fig. 1. The traction means 1 has an additional outer surface 6, wherein here the outer surface 6 is smooth and even but it could also be provided with knobs, transverse ribs or suction cups. The outer surface 6 is only necessary in the area where the traction means 1 is guided over the roller 4 because in this area the contact with the object 12 is established. Additionally, between the outer surface 6 and the traction means 1 is an additional intermediate layer 18 which can for example be a foam layer and also improve the gripping of the object.

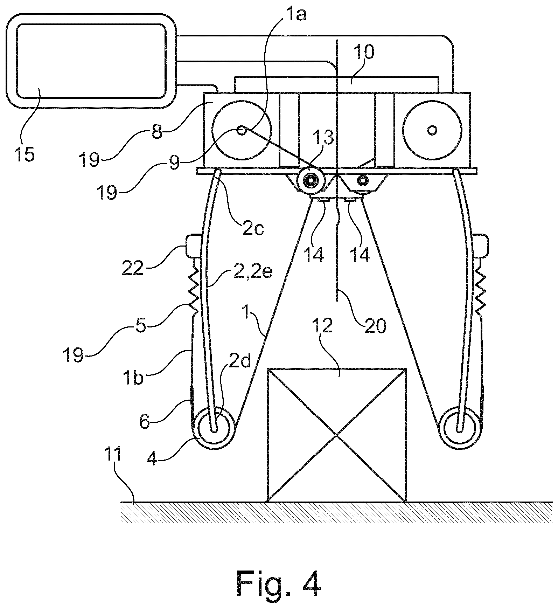

Fig. 4 shows another automatic gripper 100 in accordance with the invention. The difference to the automatic gripper 100 according to Fig. 1 is that here the fingers 2 are configured as leaf springs 2e and are firmly connected with their connecting end 2c to the base 10. Therefore, because leaf springs 2e are flexible and can be swivelled without swivel joints 3 here no swivel joints are needed for the connection between the fingers 2, 2e and the base 10. The second difference to the automatic gripper according to Fig. 1 is that the leaf spring fingers 2, 2e do not need a return member 7 because they will return to their starting point as soon as the tension from the traction means 1 is gone. Consequently, also no protrusion 21 is needed. Therefore, the automatic gripper 100 according to Fig. 4 could be considered as being easier to manufacture because less parts are needed.

### List of reference signs

- 100: Automatic gripper
- 200: robot

- 1: traction means
- 1a: first end
- 1b: second end
- 1c: fabric strap
- 2: finger
- 2a: outer finger
- 2b: inner finger
- 2c: connecting end
- 2d: fingertip
- 2e: leaf spring
- 3: swivel joint
- 4: roller
- 5: elastic means
- 6: outer surface
- 7: return member
- 8: motor
- 9: pulling device
- 9a: winding drum
- 10: base
- 11: surface
- 12: object
- 13: deflection pulley
- 14: sensor
- 15: electronic control unit
- 16: intermediate part
- 16a: coupling part
- 16b: mounting part
- 17: leaf-spring finger
- 18: intermediate layer
- 19: drive
- 20: central axis
- 21: first protrusion
- 22: second protrusion
- 23: inner layer
- 24: joints

## Claims

1. An automatic gripper (100) comprising a base (10), with at least two fingers (2), each at least partially swivelably connected to the base (10), at least one drive (19) comprising a motor (8), **characterized in that**
the drive (19) further comprises a pulling device (9) and a traction means (1) and an elastic means (5), wherein a first end (1a) of the traction means (1) is connected to the pulling device (9), wherein the pulling device (9) is configured to pull the traction means (1) and to swivel at least one of the fingers (2) by pulling the traction means (1), wherein the traction means (1) comprises an outer surface (6) configured to form a friction fit with an object (12) to be lifted.

2. The automatic gripper (100) according to claim 1, **characterised in that** each finger (2) comprises at least one fingertip (2d), wherein the fingertip (2d) comprises at least one roller (4), wherein the at least one roller (4) is preferably connected to the fingertip (2d), wherein the traction means (1) is further preferably guided over the fingertip (2d) and/or guided over the at least one roller (4), and/or wherein a second end (1b) of the traction means (1) is connected to the elastic means (5), and/or wherein the traction means (1) is the elastic means (5), and/or wherein the traction means (1) comprises the elastic means (5) and/or wherein preferably the elastic means is a traction spring, the traction spring, wherein the traction spring has a non-linear characteristic curve.

3. The automatic gripper (100) according to claim 1 or 2, **characterised in that** the at least one roller (4) comprises and/or is coated with an elastic material, and/or that the outer surface (6) of the traction means (1) comprises a coating, wherein preferably the coating is configured to improve the contact and/or the friction with the object (12) to be lifted and/or configured to provide an increased surface area.

4. The automatic gripper (100) according to any of the preceding claims, **characterised in that**
the base (10) comprises a sensor (14), wherein the sensor is configured to measure a distance, preferably of the base (10), to the object (12) to be lifted and/or wherein the sensor (14) is configured to measure a vertical force acting on the base (10), wherein the sensor is further configured to provide measured values to an electronic control unit (15).

5. The automatic gripper (100) according to any of the preceding claims, **characterised in that**
each finger (2) is connected to a return member, in particular to a return spring (7), wherein the return member is connected to the base (10).

6. The automatic gripper (100) according to any of the preceding claims, **characterised in that**
the traction means (1) is guided by at least one deflection pulley (13).

7. The automatic gripper (100) according to any of the preceding claims, **characterised in that**
the at least two fingers (2) are curved, and/or are each provided with at least two rollers (4).

8. The automatic gripper (100) according to any of the preceding claims, **characterised in that**
the at least two fingers are configured as a double link, wherein each double link has an outer finger (2a) and an inner finger (2b), wherein the double link comprises an intermediate part (16) having a coupling part (16a), wherein the coupling part (16a) is connected to the fingertip (2d) of the outer finger (2a) and to the fingertip (2d) of the inner finger (2b) by swivel joints.

9. The automatic gripper (100) according to claim 8, **characterised in that** the intermediate part (16) has a mounting part (16b) and the at least one roller (4) is mounted on the mounting part (16b).

10. The automatic gripper (100) according to claim 9, **characterised in that** the coupling part (16a) and the mounting part (16b) are connected by a swivel joint that preferably comprises a torsion spring.

11. The automatic gripper (100) according to any of the preceding claims, **characterised in that**
the at least two fingers (2), are each rotatably connected to the base (10) by at least one swivel joint (3) and/or that at least one of the fingers is a leaf-spring finger (17), wherein the at least one leaf-spring fingers (17) is configured as a leaf spring and is firmly connected to the base (10).

12. The automatic gripper (100) according to claims 2 to 11, **characterised in that** the at least one roller (4) is configured as a low friction roller, preferably a low friction roller with a ball bearing, and/or wherein the fingertips (2d) of the at least two fingers (2) comprise a low friction surface, and/or wherein the fingertips (2d) of the at least two fingers (2) are configured to guide the traction means (1).

13. The automatic gripper (100) according to any of the preceding claims, **characterised in that** the outer surface (6) of the traction means (1) comprises a soft rubber and/or an elastomeric plastic and/or leather.

14. The automatic gripper (100) according to any of the preceding claims, **characterised in that** the traction means (1) has an intermediate layer (18), preferably of soft elastic plastic, between the outer surface (6) and an inner layer (23) of the traction means (1).

15. A method for operating the automatic gripper (100) according to any of the preceding claims, **characterized in that**
the method comprises the following steps:
a) Placing an object (12) under the base (10) while the at least two fingers (2) are spread apart, or position the base over the object (12),
b) Switching on the drive (19) so that the motor (8) is activated and actuates the pulling device (9), the pulling device (9) pulling the traction means (1),
c) By pulling of the traction means (1), swivelling the fingers (2) towards each other in direction of the object (12) so that the outer surface of the traction means contacts the object (12),
d) detecting an initial lift of the object (12); and
e) after detecting the initial lift, and preferably after a predetermined time interval, stopping the motor of the drive such that a constant drive torque is maintained.
